# EUROPEAN PATENT APPLICATION

(11) **EP 2 393 272 A1**
(43) Date of publication of application: **07.12.2011**
(21) Application number: 11168779.4
(22) Date of filing: 06.06.2011
(51) Int. Cl.: H04M 11/06, H04Q 1/14, H04M 3/30

(54) **Signal splitting circuit and signal splitter**

(30) Priority: 07.06.2010 CN 201020218836 U
(71) Applicant: Tyco Electronics (Shanghai) Co., Ltd., Waigaoqiao Free Trade Zone Shanghai (CN)
(72) Inventor: Zhang, Weili, Shanghai 200233 (CN); Yin, Hongjun, Shanghai 20233 (CN)
(74) Representative: Grünecker, Kinkeldey, Stockmair & Schwanhäusser

(57) **Abstract**

The present utility model provides a signal splitting circuit and a signal splitter comprising the circuit, which provide interfaces for remote test at an office side on a mix signal and a data signal separately from other circuits, in addition to signal splitting function, by adding switches and test terminals to the prior art signal splitter.

## Description

### Field of the Utility Model

The present utility model relates to a field of communication device, and particularly relates to a signal splitting circuit and a signal splitter comprising the circuit.

### Background of the Utility Model

The signal splitter is widely used in the field of communication, for separating a speech signal and a data signal from a mix signal comprising the speech signal and the data signal.

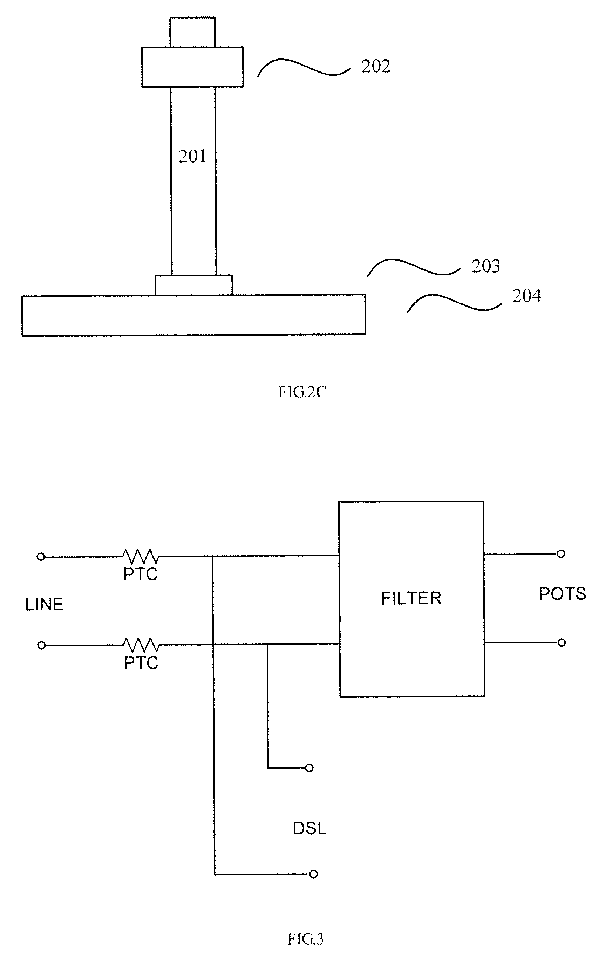

Fig.3 shows a prior art signal splitter, comprising a low-pass filter, a mix signal input of which is connected with a data signal output DSL, and also connected with a mix signal input interface LINE via a PTC resistor (positive temperature coefficient thermal resistor) for overcurrent protection. A speech signal output of the low-pass filter is connected with a speech signal output interface POTS. The low-pass filter receives at the mix signal input a mix signal inputted from the mix signal input interface LINE, removes high-frequency components from the inputted mix signal, and outputs a low-frequency speech signal from the speech signal output to the speech signal output interface POTS. The data signal output interface DSL is for outputting a data signal.

However, in practical use, the mix signal or the data signal often need to be tested remotely at an office side. The existing signal splitter does not have corresponding test interfaces, and the test has to be conducted by connecting/disconnecting the circuits, and thus is very inconvenient. Furthermore, the existing signal splitter typically can only test one of the speech, data, and speech/data signals.

### Summary of the Utility Model

The object of the present utility model is to solve at least one of the above problems and disadvantages of the prior art.

A first aspect of the present utility model provides a signal splitting circuit, comprising:
a filter comprising a mix signal input for receiving a mix signal comprising a speech signal and a data signal and a speech signal output for outputting the speech signal separated from the mix signal;
a mix signal input interface connected with the mix signal input;
a speech signal output interface connected with the speech signal output; and
a data signal output interface,
characterized in that:
   the signal splitting circuit further comprises a data signal test interface and a switch, wherein:
      the speech signal output interface is connected with the mix signal input or the speech signal test interface via the switch according to an operation mode of the switch.

According to a second aspect of the present utility model, the signal splitting circuit further comprises:
a mix signal test interface and a further switch, wherein:
   the mix signal input interface is connected with the mix signal input or the mix signal test interface via the further switch according to an operation mode of the further switch.

According to a third aspect of the present utility model, the signal splitting circuit further comprises:
an overcurrent protection device connected between the mix signal input and the mix signal input interface.

According to a fourth aspect of the present utility model, the switch and/or the further switch respectively comprise two single-pole double-throw switches.

According to a fifth aspect of the present utility model, the switch and/or the further switch respectively comprise a double-pole double-throw switch.

A sixth aspect of the present invention provides a signal splitter, comprising: a circuit board, characterized in that the signal splitter further comprises the signal splitting circuit according to the first aspect of the present utility model, wherein:
the signal splitting circuit is arranged on the circuit board;
an upper portion of the circuit board comprises four contacts, wherein a pair of contacts of the four contacts constitute the mix signal input interface, and another pair of contacts of the four contacts constitute the speech signal output interface;
a lower portion of the circuit board comprises at least four contacts, wherein a pair of contacts of the four contacts constitute the data signal output interface, and another pair of contacts of the four contacts constitute the data signal test interface.

According to a seventh aspect of the present utility model, the four contacts on the upper portion comprise two contacts on each side of the circuit board, and the four contacts on the lower portion comprise two contacts on each side of the circuit board.

An eighth aspect of the present utility model provides a signal splitter, comprising: a circuit board, characterized in that the signal splitter further comprises the signal splitting circuit according to the second aspect of the present utility model, wherein:
the signal splitting circuit is arranged on the circuit board;
an upper portion of the circuit board comprises four contacts, wherein a pair of contacts of the four contacts constitute the mix signal input interface, and another pair of contacts of the four contacts constitute the speech signal output interface;
a lower portion of the circuit board comprises at least six contacts, wherein a pair of contacts in the six contacts constitute the mix signal test interface, another pair of contacts of the six contacts constitute the data signal test interface, and a further pair of contacts of the six contacts constitute the data signal output interface.

According to a ninth aspect of the present utility model, the four contacts on the upper portion comprise two contacts on each of side of the circuit board, and the six contacts on the lower portion comprise three contacts on each side of the circuit board.

According to a tenth aspect of the present utility model, the signal splitter further comprises a wiring module, a connector and a backboard, wherein the upper portion of the circuit board is connected with the wiring module, the contacts on the upper portion of the circuit board are connected with wire clamps on the wiring module, a lower portion of the circuit board is connected with the backboard via the connector, and the contacts on the lower portion of the circuit board are connected with terminals on the backboard via the connector.

The signal splitting circuit and the signal splitter provided according to the above embodiments provide signal test interfaces for remote test at an office end on the mix signal and the data signal separately from other circuits, in addition to a general signal splitting function.

### Brief Description of the Drawings

Embodiments of the present utility model will be described by way of example with reference to the figures, wherein similar reference signs in the exemplary figures represent similar elements. In the figures:
Fig.1A is a circuit diagram showing a signal splitter according to an embodiment of the present utility model;
Fig.1B is a circuit diagram showing a signal splitter according to another embodiment of the present utility model;
Fig.2A is a structural diagram showing a signal splitter according to an embodiment of the present utility model;
Fig.2B is a diagram of a front face of the signal splitter according to an embodiment of the present utility model;
Fig.2C is a diagram of a side face of the signal splitter according to an embodiment of the present utility model; and
Fig.3 is a diagram of a prior art signal splitter.

### Detailed Description of the Embodiments

Specific implementations of the present utility model will be described with reference to particular embodiments. The structure, advantages, and effect of the present utility model will be apparent to those skilled in the art from the disclosure of following embodiments.

The present utility model can also be implemented or utilized by way of other embodiments, and the details of the specification can be modified and changed in accordance with various views and applications without departing from the inventive spirit of the present utility model.

Furthermore, the figures are simplified diagrams, which explain the basic principle of the present utility model by way of example. The figures only show components that are relative to the present utility model and the figures are not drawn exactly according to the number of components, shape, and size in actual application. The shape, number, and scale of the components in actual application can be varied as required, and the layout thereof may be more complex.

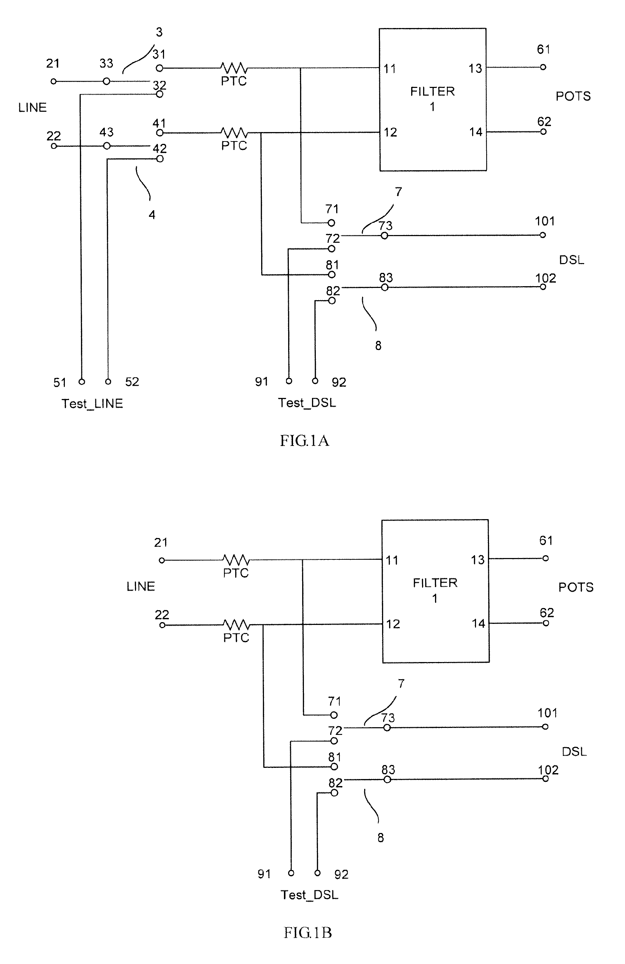

The circuit structure of a signal splitting circuit according to an embodiment of the present utility model is described with reference to Fig.1A.

As shown in Fig.1A, the signal splitting circuit according to a first embodiment of the present utility model comprises a filter 1, for separating a low-frequency speech signal from an inputted mix signal and outputting the speech signal.

The filter 1 comprises a first input pin 11, a second input pin 12, a first output pin 13, and a second output pin 14. The first input pin 11 and the second input pin 12 constitute a mix signal input of the filter 1. The first output pin 13 and the second output pin 14 constitute a speech signal output of the filter 1. The filter 1 receives a mix signal comprising a speech signal and a data signal via the mix signal input, separates the low-frequency speech signal and outputs the speech signal via the speech signal output. The first input pin 11 is connected with a first contact 31 of a first single-pole double-throw switch 3 via an overcurrent protection device such as a PTC resistor. The second input pin 12 is connected with a first contact 41 of a second single-pole double-throw switch 4 via a further PTC resistor.

A second contact 32 of the first single-pole double-throw switch 3 is connected with a first mix signal test terminal 51. A second contact 42 of the second single-pole double-throw switch 4 is connected with a second mix signal test terminal 52. The first mix signal test terminal 51 and the second mix signal test terminal 52 constitute a mix signal test interface Test_LINE.

A third contact 33 of the first single-pole double-throw switch 3 is connected with a first mix signal input terminal 21. A third contact 43 of the second single-pole double-throw switch 4 is connected with a second mix signal input terminal 22. The first mix signal input terminal 21 and the second mix signal input terminal 22 constitute a speech signal input interface LINE.

The contact 31 or the contact 32 can be connected with the contact 33 by switching the connection state of the first single-pole double-throw switch 3. The contact 41 or the contact 42 can be connected with the contact 43 by switching the connection state of the second single-pole double-throw switch 4.

The first output pin 13 of the filter 1 is connected with a first speech output terminal 61, and the second output pin 14 is connected with a second speech output terminal 62. The first speech output terminal 61 and the second speech output terminal 62 constitute a speech signal output interface POTS.

In addition, the first input pin 11 of the filter 1 is connected with a first contact 71 of the third single-pole double-throw switch 7, and a second input pin 12 is connected with a first contact 81 of the fourth single-pole double-throw switch 8.

A second contact 72 of the third single-pole double-throw switch 7 is connected with a first data signal test terminal 91. A second contact 82 of the fourth single-pole double-throw switch 8 is connected with a second data signal test terminal 92. The first data signal test terminal 91 and the second data signal test terminal 92 constitute a data signal test interface Test_DSL.

A third contact 73 of the third single-pole double-throw switch 7 is connected with a first data signal output terminal 101. A third contact 83 of the fourth single-pole double-throw switch 8 is connected with a second data signal output terminal 102. The first data signal output terminal 101 and the second data signal output terminal 102 constitute a data signal output interface DSL.

The contact 71 or the contact 72 can be connected with the contact 73 by switching the connection state of the third single-pole double-throw switch 7. The contact 81 or the contact 82 can be connected with the contact 83 by switching the connection state of the fourth single-pole double-throw switch 8.

Those skilled in the art will understand that the filter 1 can be any filter suitable for use in the signal splitter in this technical field. The first single-pole double-throw switch 3 and the second single-pole double-throw switch 4 as switches can be replaced by one double-pole double-throw switch. The third single-pole double-throw switch 7 and the fourth single-pole double-throw switch 8 as switches can also be replaced by one double-pole double-throw switch. The PTC resistor can be replaced with any suitable overcurrent protection device known in this technical field.

The operation of the signal splitting circuit according to the present utility model will be described with reference to Fig.1A. As shown in Fig.1A, in case that the contact 33 is connected with the contact 31 via the first single-pole double-throw switch 3, and the contact 43 is connected with the contact 41 by the second single-pole double-throw switch 4, the mix signal input interface LINE is connected with the mix signal input of the filter 1, for inputting the mix signal into the filter 1, such that the speech signal output interface POTS outputs the separated speech signal.

In such a case, if the contact 73 is connected with the contact 71 by the third single-pole double-throw switch 7, and the contact 83 is connected with the contact 81 by the fourth single-pole double-throw switch 8, the data signal output interface DSL outputs the data signal.

In case that the contact 33 is connected with the contact 32 by the first single-pole double-throw switch 3, and the contact 43 is connected with the contact 42 by the second single-pole double-throw switch 4, the mix signal input interface LINE is connected with the mix signal test interface Test_LINE, and the mix signal can be remotely tested at an office side separately from other circuits.

In case that the contact 73 is connected with the contact 72 by the third single-pole double-throw switch 7, and the contact 83 is connected with the contact 82 by the fourth single-pole double-throw switch 8, the data test interface Test_DSL is connected with the data output interface DSL, and the data signal can be remotely tested at an office side separately from other circuits.

Fig.1B is a circuit diagram showing a signal splitter according to another embodiment of the present utility model. The circuit shown in Fig.1B is similar with that of Fig.1A, except that the mix signal test interface Test_LINE, the first single-pole double-throw switch 3, and the second single-pole double-throw switch 4 are removed. The mix signal input interface LINE thus is directly connected with the mix signal input of the filter 1 via the overcurrent protection device PTC. This circuit enables a remote test at an office side on the data signal separately from other circuits.

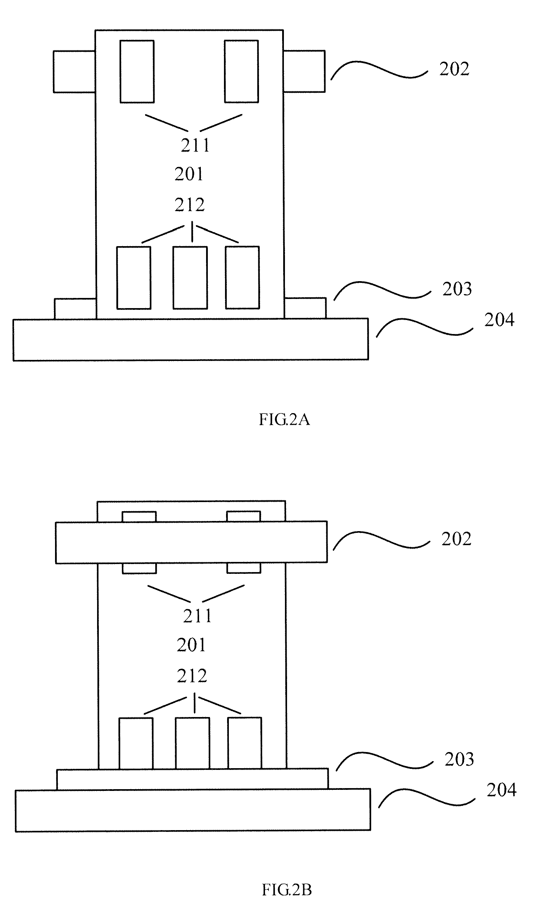

Fig.2A shows a structural diagram of a signal splitter according to an embodiment of the present utility model. As shown in Fig.2A, the circuit board 201 comprising the signal splitting circuit shown in Fig.1A has two contacts 211 on each of two sides on an upper portion of the circuit board 201, to provide the mix signal input interface LINE and the speech signal output interface POTS. The correspondence between the four contacts and the first mix signal input terminal 21, the second mix signal input terminal 22, the first speech output terminal 61, and the second speech output terminal 62 is arbitrary.

The circuit board 201 has three contacts on each of two sides on a lower portion of the circuit board 201, to provide the mix signal test interface Test_LINE, the data signal test interface Test_DSL, and the data signal output interface DSL. The correspondence between the six contacts and the first mix signal test terminal 51, the second mix signal test terminal 52, the first data signal test terminal 91, the second data signal test terminal 92, the first data signal output terminal 101, and the second data signal output terminal 102 is arbitrary. Those skilled in the art will understand that the circuit board 201 may comprise other contacts for additional functions.

As shown in Fig.2A, the upper portion of the circuit board 201 may be connected with a wiring module 202, wherein the four contacts on the upper portion of the circuit board 201 are connected with wire clamps on the wiring module. The lower portion of the circuit board 201 may be connected with a backboard 204 via a connector 203, wherein the six contacts on the lower portion of the circuit board 201 are connected with terminals of the backboard 204.

It should be noted that the signal splitting circuit shown in Fig.1A can be at any suitable position on the circuit board, so Fig.2A does not show its particular position.

In case that the circuit board 201 comprises the signal splitting circuit shown in Fig.1B, the circuit board 201 has two contacts 211 on each of two sides of an upper portion of the circuit board 201, to provide the mix signal input interface LINE and the speech signal output interface POTS. The correspondence between the four contacts and the first mix signal input terminal 21, the second mix signal input terminal 22, the first speech output terminal 61, the second speech output terminal 62 is arbitrary. The circuit board 201 has two contacts 212 on each of two sides of a lower portion of the circuit board 201, to provide the data signal test interface Test_DSL and the data signal output interface DSL. Similarly, the correspondence between the four contacts and the corr esponding terminals is arbitrary. Those skilled in the art will understand that the circuit board 201 may have further contacts for other functions.

The wiring module, the connector, and the backboard are all well-known devices in the art, so a detailed explanation thereof is omitted, to avoid obscuring the subject matter of the present utility model unnecessarily.

Fig.2B is a diagram of a front face of the signal splitter according to an embodiment of the present utility model.

Fig.2C is a diagram of a side face of the signal splitter according to an embodiment of the present utility model.

The signal splitter according to the present utility model provides interfaces for remote test at an office side on the mix signal and/or the data signal separately from other portions of the circuit, in addition to signal splitting function, in order to facilitate the mounting and maintenance of the signal splitter.

The above embodiments of the present utility model only exemplify the principle and effect of the utility model, rather than limiting the scope thereof. Those skilled in the art will understand that any changes or improvements without departing from the spirit and scope of the present utility model will fall in the scope of the present utility model. The protection scope of the present utility model is defined by the claims.

## Claims

1. A signal splitting circuit, comprising:
a filter (1) comprising a mix signal input (11, 12) for receiving a mix signal comprising a speech signal and a data signal, and a speech signal output (13, 14) for outputting the speech signal separated from the mix signal;
a mix signal input interface (LINE) connected with the mix signal input;
a speech signal output interface (POTS) connected with the speech signal output; and
a data signal output interface (DSL),
**characterized in that**:
the signal splitting circuit further comprises a data signal test interface (Test_DSL) and a switch (7, 8), wherein:
the speech signal output interface (DSL) is connected with the mix signal input (11, 12) or the speech signal test interface (Test_DSL) via the switch (7, 8) according to an operation mode of the switch (7, 8).

2. The signal splitting circuit according to claim 1, **characterized in that** it further comprises:
a mix signal test interface (Test_LINE) and a further switch (3, 4), wherein:
the mix signal input interface (LINE) is connected with the mix signal input (11, 12) or
the mix signal test interface (Test_LINE) via the further switch (3, 4) according to an operation mode of the further switch (3, 4).

3. The signal splitting circuit according to claim 1 or 2, **characterized in that** it further comprises:
an overcurrent protection device (PTC) connected between the mix signal input (11, 12) and the mix signal input interface (LINE).

4. The signal splitting circuit according to claim 1 or 2, **characterized in that** the switch (7, 8) and/or the further switch (3, 4) respectively comprise two single-pole double-throw switches.

5. The signal splitting circuit according to claim 1 or 2, **characterized in that** the switch (7, 8) and/or the further switch (3, 4) respectively comprise a double-pole double-throw

6. A signal splitter, comprising: a circuit board (210), **characterized in that** the signal splitter further comprises the signal splitting circuit according to claim 1, wherein:
the signal splitting circuit is arranged on the circuit board (201);
an upper portion of the circuit board comprises four contacts (211), wherein a pair of contacts among the four contacts constitute the mix signal input interface (LINE), and
another pair of contacts among the four contacts constitute the speech signal output interface (POTS);
a lower portion of the circuit board comprises at least four contacts (212), wherein a pair of contacts among the four contacts constitute the data signal output interface (DSL),
and another pair of contacts among the four contacts constitute the data signal test interface (Test_DSL).

7. The signal splitter according to claim 6, **characterized in that** the four contacts on the upper portion are arranged as two contacts on each side of the circuit board, and the four contacts on the lower portion are arranged as two contacts on each side of the circuit board.

8. A signal splitter, comprising: a circuit board (201), **characterized in that** the signal splitter further comprises the signal splitting circuit according to claim 2, wherein:
the signal splitting circuit is arranged on the circuit board (201);
an upper portion of the circuit board comprises four contacts (211), wherein two contacts among the four contacts constitute the mix signal input interface (LINE), and another pair of contacts among the four contacts constitute the speech signal output interface (POTS);
a lower portion of the circuit board comprises at least six contacts (212), wherein a pair of contacts among the six contacts constitute the mix signal test interface (Test_LINE),
another pair of contacts in the six contacts constitute the data signal test interface (Test_DSL), and a further pair of contacts in the six contacts constitute the data signal output interface (DSL).

9. The signal splitter according to claim 8, **characterized in that** the four contacts on the upper portion comprise two contacts on each side of the circuit board, and the six contacts on the lower portion comprise three contacts on each side of the circuit board.

10. The signal splitter according to claim 6 or 8, **characterized in that** it further comprises a wiring module (202), a connector (203) and a backboard (204), wherein the upper portion of the circuit board is connected with the wiring module (202), the contacts on the upper portion of the circuit board are connected with wire clamps on the wiring module (202), a lower portion of the circuit board is connected with the backboard (204) via the connector (203), and the contacts on the lower portion of the circuit board are connected with terminals on the backboard (204) via the connector (203).
